# EUROPEAN PATENT APPLICATION

(11) **EP 4 435 075 A1**
(43) Date of publication of application: **25.09.2024**
(21) Application number: 23163163.1
(22) Date of filing: 21.03.2023
(51) Int. Cl.: C09K 11/80

(54) **METHOD FOR TREATING LUMINESCENT NANOPARTICLES**

(71) Applicant: Seaborough IP I B.V., 1098 XG Amsterdam (NL)
(72) Inventor: Sontakke, Atul Dnyaneshwar, 1094 EA AMSTERDAM (NL); Khanin, Vasilii Mikhailovich, 1096 HV AMSTERDAM (NL); Montanarella, Federico, 3581 LG Utrecht (NL); Van de Haar, Marie Anne, 1381HL Weesp (NL)
(74) Representative: Hoyng Rokh Monegier B.V.

(57) **Abstract**

There is provided a method for treating luminescent nanoparticles, comprising (i) providing a mixture of (a) a salt and (b) luminescent nanoparticles or precursors thereof, wherein the luminescent nanoparticles are (A₁₋ₓBₓ)₃(C_{1-y}D_{y})₅O₁₂ garnet nanoparticles, wherein A comprises one or more of yttrium, lutetium, gadolinium; B comprises one or more rare earth elements, C comprises one or more of aluminum, gallium, and scandium, D comprises one or more transition metal ions, 0≤x≤1, 0≤y≤1, (ii) heating said mixture at a first temperature for a first duration, wherein said first temperature is 800 °C or higher, wherein said first duration is 10 minutes or more, and (iii) heating said mixture under a reducing atmosphere at a second temperature for a second duration, wherein said second temperature is 500 °C or higher, wherein said second duration is 1 hour or more. There is further provided the nanoparticles obtainable by the method.

## Description

### Field of the invention

The invention relates to treating luminescent nanoparticles. The invention further relates to the treated luminescent nanoparticles. The invention further relates to luminescent compositions comprising the treated luminescent nanoparticles, and methods of making said luminescent compositions. The invention further relates to applications of and devices comprising the treated luminescent nanoparticles, or the luminescent compositions of the invention.

### Background of the invention

Luminescent down-conversion materials play an important role in solid-state lighting devices for illumination and display applications, among others. Such materials may also be used as taggants, for example in security inks. WO2018/167266 discloses compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

Non-radiative energy transfer (sometimes also referred to as Fluorescent Resonance Energy Transfer, FRET) from the sensitizer material to the light emitting material involves the non-radiative transfer of energy from an excited sensitizer ion in the sensitizer material to an acceptor (or emitter) ion in the light emitting material. It is evidenced by increased emission from an emitter ion in the light emitting material upon selective excitation of the sensitizer ion in the sensitizer material.

Nanomaterials are of interest due to their high surface area and small volume, which enables to arrange luminescent materials close in space to harness inter-particle FRET. To be able to effectively harness inter-particle FRET, it is desirable to have very small size (<10 nm) luminescent particles. However, suitable nanomaterials may have poor quality (chemical, stability, optical and/or physical) due to their small size and poor crystallinity. WO2021043762A1 teaches annealing nanoparticles improves lattice densification (quality), homogeneity and phase purity as well as photoluminescence properties. However further improvements are required.

Cerium doped-yttrium aluminum garnet (YAG:Ce) is the benchmark phosphor for solid-state LED lighting. In microcrystalline form (or as bulk single crystals/ceramics), YAG:Ce is highly efficient; however, at nano-scale, it often suffers from weak emission intensity, low conversion efficiency and poor stability.

Wet-chemical synthesis (solvothermal, precipitation, sol-gel, etc.) offers YAG:Ce nanoparticles with sizes as low as 5 nm. Such as-synthesized nano YAG:Ce may possess impurity phases, a weaker lattice and poor photoluminescence (PL) properties.

Song, Dong, Shao and Jiang, J Mater Sci (2018) 53:15196-15203 discloses preparing Y₃Al₅O₁₂:Ce nanophosphors. However, it has been found that this method did not result in the disclosed small size after heating at 1000 °C for 4 hours. Also, this method limits to materials made with a precipitation method.

Thus, there remains a need for luminescent nanomaterials having improved quality and stability at small sizes. Further, there is a need for luminescent compositions exhibiting high photoluminescence quantum yield (QY) and improved stability, and for methods for the preparation thereof.

### Summary of the invention

The invention provides a method for treating luminescent nanoparticles or precursors thereof, comprising:
(i) providing a mixture of (a) a salt and (b) luminescent nanoparticles or precursors thereof,
   wherein the luminescent nanoparticles are (A₁₋ₓBₓ)₃(C_{1-y}D_{y})₅O₁₂ garnet nanoparticles, wherein A comprises one or more of yttrium, lutetium, gadolinium; B comprises one or more rare earth elements, C comprises one or more of aluminum, gallium, and scandium, D comprises one or more transition metal ions, 0≤x≤1, 0≤y≤1, and x+y>0,
(ii) heating said mixture at a first temperature for a first duration,
   wherein said first temperature is 800 °C or higher,
   wherein said first duration is 10 minutes or more, and
(iii) heating said mixture under a reducing atmosphere at a second temperature for a second duration,
   wherein said second temperature is 500 °C or higher,
   wherein said second duration is 1 hour or more.

The method of the invention allows to obtain luminescent nanoparticles having improved photoluminescence quantum yield over luminescent nanoparticles that are untreated, or have been subjected to only a single heating step. The inventors have found that the combination of the salt mixing and two heating steps, allows to obtain small nanoparticles having improved PLOY and photostability.

The invention further provides a luminescent nanoparticle obtainable by the method of the invention, which is a (A₁₋ₓBₓ)₃(C_{1-y}D_{y})₅O₁₂ garnet nanoparticle, wherein A comprises one or more of yttrium, lutetium, gadolinium; B comprises one or more rare earth elements, C comprises one or more of aluminum, gallium, and scandium, D comprises one or more transition metal ions, and 0≤x≤1, 0≤y≤1, and x+y>0, said luminescent nanoparticle having:
- a BET surface area of > 10 m²/g, or a D₅₀ of > 0.5 nm and <_ 100 nm, more preferably ≥ 5 nm and ≤ 50 nm, as measured using transmission electron microscopy (TEM),
- a storage photostability such that the photoluminescence intensity after two weeks of storage in a non-inert atmosphere is at least 80% of the initial photoluminescence intensity,
- a photostability such that at least 80% of the initial photoluminescence intensity remains after 10 hours when irradiating at 450 nm with a light intensity of 0.1 W/cm², preferably at least 80% of the initial photoluminescence intensity after 15 hours.

If B comprises at least Ce, the nanoparticle of the invention has:
- a photoluminescence quantum yield of more than 25%, preferably more than 30%,
- peak ratio in the excitation spectra (between 455 nm and 380 nm) of more than 20.

The luminescent nanoparticle of the invention thus has improved properties.

The invention further provides a luminescent composition comprising the luminescent nanoparticles of the invention or obtainable by the method of the invention.

### Brief description of the figures

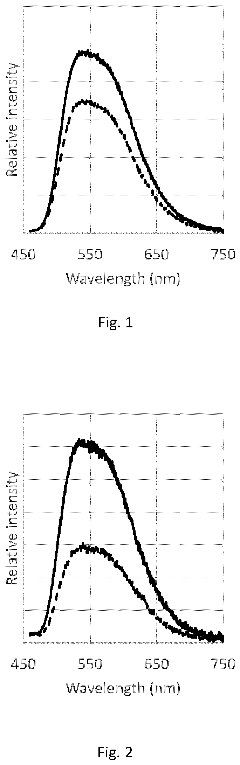

FIGURE 1 shows the emission spectra of single step annealed nanosize YAG:Ce, i.e. annealed in air at 1020 °C for 2 hours (dotted line, comparative example 1) and two-step annealed nanosize YAG:Ce, i.e. first annealed in air at 1020 °C for 2 hours and then in reducing atmosphere at 800 °C for 8 hours (solid line, example 1). The excitation was at 440 nm.
FIGURE 2 shows the emission spectra of single step annealed nanosize YAG:Ce, i.e. annealed in air at 1000 °C for 2 hours (dotted line, comparative example 2) and two-step annealed nanosize YAG:Ce, i.e. first annealed in air at 1000 °C for 2 hours and then in reducing atmosphere at 800 °C for 8 hours (solid line, example 2). The excitation was at 440 nm.

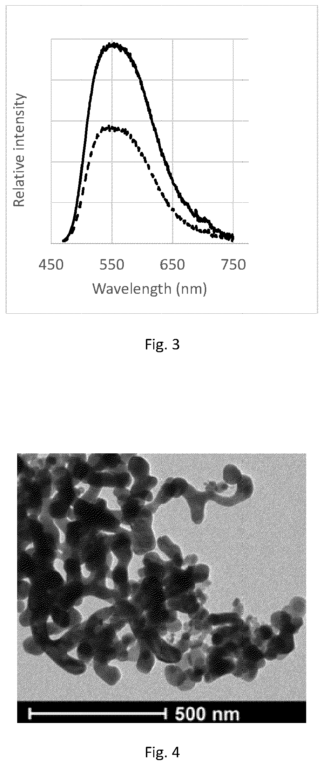

FIGURE 3 shows the emission spectra of single step annealed nanosize YAG:Ce, i.e. annealed in air at 900 °C for 2 hours (dotted line, comparative example 3) and two-step annealed nanosize YAG:Ce, i.e. first annealed in air at 900 °C for 2 hours and then in reducing atmosphere at 800 °C for 8 hours (solid line, example 3). The excitation was at 440 nm.
FIGURE 4 shows the TEM image of two-step annealed nanosize YAG:Ce, i.e. first annealed in air at 1020 °C for 2 hours and then in reducing atmosphere at 800 °C for 8 hours (Example 1).

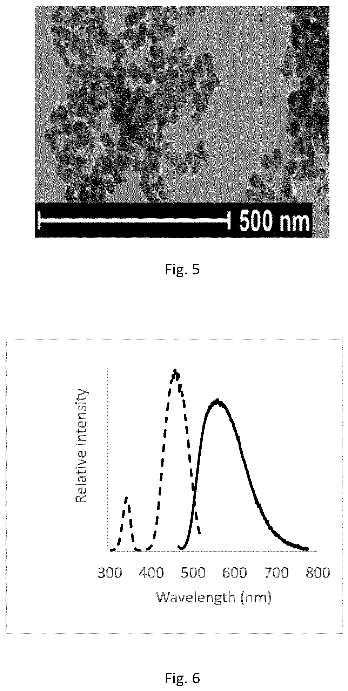

FIGURE 5 shows the TEM image of two-step annealed nanosize YAG:Ce, i.e. first annealed in air at 1000 °C for 2 hours and then in reducing atmosphere at 800 °C for 8 hours (Example 2).
FIGURE 6 shows the emission (solid line) and excitation (dotted line) spectra of two-step annealed nanosize YAG using only salt-matrix, i.e. annealed in air at 1000 °C for 2 hours and then in reducing atmosphere at 800 °C for 8 hours (example 4). The excitation was at 440 nm.

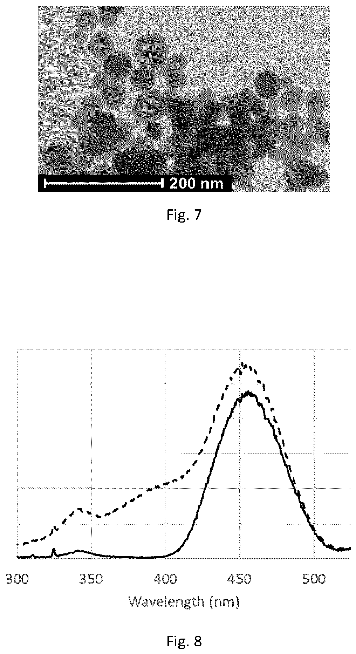

FIGURE 7 shows the TEM image of two-step annealed nanosize YAG:Ce using only salt-matrix, i.e. first annealed in air at 1000 °C for 2 hours and then in reducing atmosphere at 800 °C for 8 hours (Example 4).
FIGURE 8 shows the excitation spectra of solvothermal Ce-doped nanosize YAG:Ce before (dotted line) and after (solid line) two-step annealing experiments at 800 °C or above temperature. The solvothermal synthesis of precursor nanoparticles was carried out at 400 °C or lower temperature. The excitation spectra were recorded by monitoring 550 nm emission.

### Detailed description of the invention

### Luminescent nanoparticles

The luminescent nanoparticles are (A₍₁₋ₓ₎Bₓ)₃(C_{(1-y)}D_{y})₅O₁₂ garnet nanoparticles, wherein A comprises one or more of yttrium, lutetium, gadolinium; B comprises on or more rare earth elements, C comprises one or more of aluminum, gallium, and scandium, D comprises on or more transition metal ions and 0≤x≤1, 0≤y≤1, and x+y>0.

Preferably, B comprises cerium, and C comprises aluminum. These are nanoparticles of the type cerium-doped aluminum garnet, like yttrium aluminum garnet (YAG:Ce), lutetium aluminum garnet (LuAG:Ce), gadolinium aluminum garnet (GdAG:Ce), or combinations thereof like (Y,Lu)AG:Ce.

Preferably, the luminescent nanoparticles are obtained by a solvothermal method. Solvothermal synthesis is performed by heating suspended metal salts in a solvent, resulting in colloidal solutions of ultrafine metal oxide particles.

Preferably, the solvothermal method is a glycothermal method. In a glycothermal synthesis, a glycol is used as the solvent. Such a glycothermal method is described in J. Mater. Chem. C, 2017,5,12561. A glycol is an aliphatic diol. Suitable glycols for use in glycothermal synthesis are ethylene glycol, 1,2-propanediol, 1,2-butanediol, 1,3-propanediol, 1,4-butanediol. More preferably, the luminescent nanoparticles are obtained by a glycothermal method, wherein 1,4-butanediol is the glycol solvent.

Preferably, a co-solvent is used in the glycothermal method. A co-solvent can allow to reduce the size and aggregation of the nanoparticles. More preferably, the luminescent nanoparticles are obtained by a glycothermal method, wherein 1,4-butanediol is the glycol solvent, and further comprises a co-solvent which is at least one of ethylene glycol, diethylene glycol, and polyethylene glycol 200.

### Salt

Any suitable salt having a melting temperature I of above the temperature at which the mixture is heated may be used in the methods according to all aspects of the invention. Preferably, the salt has a melting temperature of 800 °C or higher, more preferably 1000 °C or higher.

Preferably, the salt comprises Se²⁻, S²⁻, Cl⁻, F⁻, Br, I⁻, SO₄²⁻, PO₄³⁻, or NO₃⁻, or a combination thereof as anion and H⁺, Li⁺, Na⁺, K⁺, Be²⁺, Ca²⁺, Al³⁺, Ba²⁺, Mg²⁺, or Sr²⁺, or a combination thereof as cation. More preferably, the salt is K₂SO₄ (Tₘ=1069 °C).

The salt is preferably provided as a crystalline solid.

If desired, the salt may ground or milled. The smaller particles allow the salt to more evenly mix with the luminescent material.

### (i) Providing a mixture of a salt and luminescent nanoparticles.

The methods according to all aspects of the invention comprise preparing a mixture comprising the salt and the luminescent nanoparticles.

The mixture comprising the salt and the luminescent nanoparticles can be prepared in any suitable manner.

In a preferred embodiment (hereinafter also referred to as A), preparing the mixture comprises dry mixing (i) the salt and (ii) the luminescent nanoparticles. The skilled person will understand that, in this embodiment, the luminescent nanoparticles and the salt are mixed as dry solids. This embodiment has the advantage that no suspension, dispersion and/or evaporation steps are required. Preferably, the dry mixing comprises grinding or milling a mixture comprising (i) the salt and (ii) the luminescent nanoparticles.

In a further preferred embodiment (hereinafter also referred to as B), preparing the mixture comprises mixing (i) said salt and (ii) said luminescent nanoparticles into a liquid to obtain a dispersion. The liquid may then be separated from the dispersion, preferably by evaporation of said liquid. The salt may be added to the liquid before, after or while dispersing the luminescent nanoparticles in the liquid. Preferably, the salt is added in excess such that it does not completely dissolve.

Any suitable liquid may be chosen in which the luminescent nanoparticles may disperse well. Preferably, the liquid has a relatively low boiling point, as this facilitates removal of the liquid later in the process. Preferably, the liquid is water or an alcohol. Preferably, the alcohol is a C₁-C₄ alkanol, for instance methanol, ethanol, or propanol.

Preferably, the mixture is subjected to sonification in an ultrasonic bath or using an ultrasonic probe. This has the advantage that mixing may be enhanced.

In a further preferred embodiment (hereinafter also referred to as C) preparing said mixture comprises preparing an emulsion comprising an disperse phase and a continuous phase, the disperse phase comprising (i) said salt and (ii) said luminescent nanoparticles. The liquids forming the emulsion may then be separated from the emulsion, preferably by sedimentation of the emulsion droplets. Preferably, the disperse phase is an aqueous phase and the continuous phase is a non-polar (or oil) phase. Any suitable non-polar solvent may be used to obtain the non-polar (or oil) phase, for instance a C₅-C₁₂ alkane, preferably cyclohexane.

The emulsion may be prepared in any suitable manner, for instance using sonification. Sedimentation may be effected in any suitable manner, for instance by contacting the emulsion with an alcohol or acetone and/or by gravity separation (e.g. centrifugation).

Preferably, preparing the mixture comprising (i) said salt and (ii) said luminescent nanoparticles comprises (applicable to each of embodiments A, B and C) comminuting the salt, for instance by milling or grinding and/or subjecting (i) said salt and/or (ii) said luminescent nanoparticles to ultrasonic treatment, milling and/or grinding. These measures may be performed on the materials before, during or after mixing.

### Salt:luminescent nanoparticles weight ratio (w/w)

There is no particular upper or lower limit for the weight ratio of the salt:luminescent nanoparticles. Preferably, the salt:luminescent nanoparticles (w/w) ratio is chosen sufficiently high that the luminescent nanoparticles are separated far enough to prevent sintering at high temperature. As discussed, it is found that increasing the salt:luminescent nanoparticles (w/w) ratio has the advantage of reducing sintering (aggregation, growth and/or clustering). This effect is found to be particularly pronounced in case of embodiments (A) and (B) described hereinabove.

Preferably, the weight ratio of salt to luminescent nanoparticles in the mixture is more than 1:1 (w/w), preferably more than 2:1 (w/w), more preferably more than 5:1 (w/w), most preferably more than 10:1 (w/w). Preferably, the weight ratio of salt:luminescent nanoparticles in the mixture is about 50:1 or higher, about 100:1 or higher, or 200:1 or higher, in particular in case of embodiments (A) or (B) described hereinabove. It is found that a high salt:luminescent nanoparticles weight ratio leads to both better separation of the luminescent nanoparticles and better salt matrix characteristics. It has further been found that higher salt:luminescent nanoparticles ratios allow longer heating of the mixture without sintering of the nanoparticles.

However, extremely high weight ratios of salt:luminescent nanoparticles may be impractical, requiring extremely large amounts of salt. Thus, for practical reasons, the weight ratio is preferably about 500:1 or lower, more preferably about 100:1 or lower. In case mixing method (C) is used, the preferred salt:luminescent nanoparticles ratios may be lower. Preferably 10:1 (w/w) or lower is used, more preferably 5:1 (w/w) or lower.

As will be understood by the skilled person and as used herein in expressing the ratio the weight of the luminescent nanoparticles refers to the total weight of the luminescent nanoparticles present in the mixture.

### (ii) Heating said mixture at a first temperature for a first duration

The mixture is heated at a first temperature for a first duration. Heating luminescent nanoparticles allows to remove crystal defects in the lattice, and to induce and/or promote crystallinity.

The first temperature is 800 °C or higher. Preferably, the first temperature is 900 °C or higher. Preferably, the first temperature is 1500 °C or lower, more preferably 1250 °C or lower. Lower temperatures are not effective at removing crystalline defects. Higher temperatures are not practical, as the salt may melt and it requires high energy consumption.

The first duration is 10 minutes or more. Preferably, said first duration is 30 minutes or more, more preferably 1 hour or more. Preferably, said first duration is 8 hours or less, more preferably 5 hours or less, most preferably 3 hours or less. Short durations may not be effective at removing crystalline defects.

Higher temperatures allow for shorter heating durations, and longer durations allow for lower temperatures.

The heating said mixture at a first temperature for a first duration is performed in an atmosphere. Preferably, the atmosphere is air or an inert gas. When the mixture is heated in air, no special measures need to be taken. The inert gas may be N₂ or Ar.

### (iii) Heating said mixture under a reducing atmosphere at a second temperature for a second duration

The mixture is heated under a reducing atmosphere at a second temperature for a second duration. It has been found that this step allows to obtain luminescent nanoparticles showing excellent stability and luminescence.

The second temperature is 500 °C or higher. Preferably, said second temperature is 600 °C or higher, more preferably 700 °C or higher. Preferably, said second temperature is 1050 °C or lower, more preferably 900 °C or lower. Higher temperatures under reducing atmosphere may cause the luminescent material or the salt to melt. Lower temperatures may not be effective.

The second duration is 1 hour or more. Preferably, said second duration is 2 hours or more, more preferably 5 hours or more, even more preferably 7 hours or more. Preferably, said second duration is 12 hours or less, more preferably 9 hours or less.

Higher temperatures allow for shorter heating durations, and longer durations allow for lower temperatures.

A reducing atmosphere as used herein is an atmospheric condition in which oxidation is prevented and containing actively reducing gases such as hydrogen and carbon monoxide. Preferably, the reducing atmosphere comprises carbon monoxide.

Heating under a reducing atmosphere may be performed using any method known to the skilled person. Preferably, heating under a reducing atmosphere is performed by having the mixture in a first crucible, said first crucible being contained in a second crucible, said second crucible further containing a carbon source. This is also known as a "double crucible method". When the double crucible is heated, the carbon partially oxidizes to carbon monoxide.

### (iv) removing the salt from said mixture

Generally, after heat treatment, the luminescent nanoparticles are separated from the mixture. Salt may be removed from the mixture in any suitable manner. Preferably, the salt is removed by contacting the liquid with a solvent which enables the salt to dissolve, more preferably water. In a preferred embodiment, the salt is K₂SO₄ and the solvent is water.

### Luminescent nanoparticle obtainable by the method

There is provided a luminescent nanoparticle obtainable by the method as described. The luminescent nanoparticle is a (A₁₋ₓBₓ)₃(C_{1-y}D_{y})₅O₁₂ garnet nanoparticle, wherein A comprises one or more of yttrium, lutetium, gadolinium; B comprises one or more rare earth elements, C comprises one or more of aluminum, gallium, and scandium, D comprises one or more transition metal ions, and 0≤x≤1, 0≤y≤1, and x+y>0.

Preferably, A comprises at least one selected from the group of yttrium, lutetium, and B comprises at least one of cerium, terbium and europium. More preferably, C is aluminum and B is cerium, europium, terbium or a combination of terbium and europium.

Doping concentrations are dependent on the type of ion. Preferably, when B comprises cerium, the molar concentration of cerium on the combined total of A and B is 0.05-5%. Preferably, when B comprises europium, the molar concentration of europium on the combined total of A and B is 0.1-20%. Preferably, when B comprises terbium, the molar concentration of terbium on the combined total of A and B is 20-100%. Combinations of the preferred doping ranges are possible as well, for example when B comprises both terbium and europium.

The luminescent nanoparticle has improved properties.

The luminescent nanoparticle treated with the method described has a BET surface area of >10 m²/g, or the luminescent nanoparticle has a D₅₀ of ≥ 0.5 nm and ≤ 100 nm, more preferably ≥ 5 nm and ≤ 50 nm, as measured using transmission electron microscopy (TEM). Luminescent nanoparticles obtained by precipitation methods generally form a networked structure, which are more suited to be defined by their BET surface area. Luminescent nanoparticles obtained by solvothermal methods are discrete particles suitable for measuring using TEM.

The luminescent nanoparticle has a photoluminescence quantum yield of more than 25%, preferably more than 30%. The photoluminescence quantum yield is determined using an integrating sphere method, where the absorption and emission photons by the sample are measured with respect to a reference. The quantum yield is then determined as the ratio of the amount of emitted photons over the absorbed photons by the sample is.

When Ce is used as dopant, the luminescent nanoparticle material excitation spectrum of Ce in the garnet has a peak ratio of the intensities measured at 455 nm and 380 nm (455:380) of more than 20. This is different from cerium doped aluminum garnet nanoparticles that have not been treated at a high temperature, where the excitation probability at 380 nm is much stronger than in annealed or bulk cerium aluminum garnets, and wherein consequently the peak ratio is much lower than 20.

The luminescent nanoparticle has improved storage stability. The storage photostability is such that the photoluminescence intensity after two weeks of storage in a non-inert atmosphere is at least 80% of the initial photoluminescence intensity. Many luminescent nanoparticle materials have poor photostability.

The luminescent nanoparticle has improved photostability. The photostability under illumination is such that at least 80% of the initial photoluminescence intensity remains after 10 hours, preferably at least 80% of the initial photoluminescence intensity after 15 hours. Illumination is performed at 450 nm with a light intensity of at least 0.1 W/cm².

### Luminescent composition

There is further provided a luminescent composition comprising the nanoparticles obtainable by the method of the invention, or the nanoparticles of the invention.

The luminescent composition comprising the nanoparticles of the invention, will comprise at least trace amounts of salt, as the method of the invention involves the salt baking step. Thus, said luminescent composition may comprise at least 800 ppm (by weight) of one or more selected from the group of Li, Na, Ba, K, Be, Ca, Mg, or Sr, and at least 800 ppm (by weight) of one or more selected from the group of Se, S, Cl, F, Br, I, P, or N. When K₂SO₄ is used as the salt, the luminescent composition may comprise 1300 ppm (by weight) of K and 1100 ppm (by weight) of S.

Preferably, the luminescent composition comprises a first luminescent material and a second luminescent material, wherein at least one of said first luminescent material or said second luminescent material comprises the nanoparticles according to the invention or obtainable with the method according to the invention.

Preferably, the luminescent composition comprises a first luminescent material capable of emitting light in a first wavelength range and a second luminescent material being capable of absorbing light in a second wavelength range, and having an emission spectrum which overlaps at least partly with one or more of the excitation bands of said first luminescent material. At least one of said first luminescent material or said second luminescent material comprises the nanoparticles according to the invention or the nanoparticles obtainable with the method according to the invention.

Preferably, the first luminescent material and second luminescent material are so arranged to each other to allow non-radiative energy transfer from the second luminescent material to the first luminescent material.

The first luminescent material is capable of emitting light in a first wavelength range. The skilled person will understand that the first luminescent material functions as an emitting material in the luminescent composition according to the invention. The first wavelength range may be any wavelength range of interest. Preferred wavelength ranges will be described hereinafter.

The second luminescent material is capable of absorbing light in a second wavelength range. The skilled person will understand that the second luminescent material functions as a sensitizer material in the luminescent composition according to the invention. The second wavelength range may be any wavelength range of interest. Preferred wavelength ranges will be described hereinafter.

The second luminescent material has, when excited by light in the second wavelength range, an emission spectrum which overlaps at least partly with one or more excitation bands of said first luminescent material. The skilled person is well able to determine the overlap of the spectra based on spectra known in the art or by determining the spectra by routine experimentation, which is for example disclosed in WO2020/053429.

Preferably, the overlap of said emission spectrum of said second material and one or more excitation bands of said first material is in the blue (440 to 480 nm), green (510 to 560 nm) or yellow (560 to 580 nm) wavelength range.

Preferably, said first luminescent material and said second luminescent material are so arranged to each other to allow non-radiative energy transfer (sometimes also referred to as Fluorescent Resonance Energy Transfer, FRET) from said second luminescent material (sensitizer material) to said first luminescent material (emitter material). Generally, this comprises close proximity between the first and second luminescent materials, for instance from about 0.5 nm to about 20 nm in distance. The skilled person is well aware how non-radiative energy transfer may be achieved. This is, for instance, described in WO2018/167266, the contents of which are herewith incorporated by reference. The skilled person will understand that non-radiative energy transfer involves non-radiative transfer of energy from an excited sensitizer material to an acceptor (or emitter) ion in the emitting material. It is evidenced by increased selective excitation of the sensitizer material resulting in increased emission from an emitter ion in the emitting material. The non-radiative energy transfer of interest may originate from either Förster- or Dexter-type energy transfer. The skilled person will realize that - since resonant energy transfer is in first order inversely proportional to inter-ion distance at the power of 6 (in case of Förster-type energy transfer), or exponentially proportional to the distance (in case of Dexter-type energy transfer) - the arrangement to allow non-radiative energy transfer may be effected by proper engineering of the effective distances between the sensitizer material and the emitter ions in the emitting material.

Preferably, the first luminescent material and/or the second luminescent material comprise rare-earth metal doped garnet nanoparticles. This allows a large interaction surface between the first and second material, which (further) enables non-radiative energy transfer to occur. The rare-earth metal doped garnet nanoparticles have desirable luminescent properties. Examples of a rare-earth metal doped garnet nanoparticles suitable for the first luminescent material and/or second luminescent material is YAG:RE nanoparticles, LuAG:RE nanoparticles, and/or the rare-earth metal doped garnet nanoparticles of the invention.

Preferably, the first luminescent material comprises the luminescent nanoparticles of the invention, which is (A₁₋ₓBₓ)₃(C_{1-y}D_{y})₅O₁₂ garnet nanoparticles, wherein B is preferably europium, or europium and terbium. These ions have desired absorption/emission characteristics.

Preferably, said second luminescent material comprises the luminescent nanoparticles of the invention. The luminescent nanoparticles according to the invention are well suited for use in luminescent compositions. More preferably, in the (A₁₋ₓBₓ)₃(C_{1-y}D_{y})₅O₁₂ garnet nanoparticles of the invention, B is cerium, or cerium and terbium. These ions have desired absorption/emission characteristics.

Preferably said first luminescent material and said second luminescent material are in the form of nanoparticles. Suitable nanoparticles include particles of which at least one dimension is at a nanometer scale, preferably ≤ 100 nm. The small size allows smaller distances between the surfaces of the first and second material, which (further) enables inter-particle non-radiative energy transfer to occur. Providing both materials in the form of nanoparticles allows more efficient mixing and even distribution of the particles, which further promotes inter-particle non-radiative energy transfer to occur.

As discussed, the D₅₀ value of the smallest dimension of the nanoparticles is preferably ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM). D₅₀ is defined as the median value of the length of the smallest dimension of the nanoparticles, measured from an ensemble of at least 50 representative particles.

In another preferred embodiment, the first luminescent material is provided as a bulk material with the second luminescent material provided on the first luminescent material. In this context the term "bulk" especially means and/or includes greater than nanoscale, for example greater than 100 nm in diameter and including micro-size scales.

As discussed, the second luminescent material may comprise the luminescent nanoparticles according to the invention. In compositions wherein the second luminescent material comprises the nanoparticles of the invention, the first luminescent material is preferably as described below. More preferably, the second luminescent material comprises the (A₁₋ₓBₓ)₃(C_{1-y}D_{y})₅O₁₂ garnet nanoparticles of the invention, wherein C is cerium or cerium and terbium, and the first luminescent material is as described below.

The skilled person will understand that the first and second material have to be in close proximity for FRET to occur.

### First luminescent material

The first luminescent material is capable of emitting light in a first wavelength range. The first wavelength range may be any wavelength range of interest.

Preferably, the first luminescent material comprises a red or green emitting material. As used herein the term red emitting material refers to a material which, upon suitable excitation, has one or more emission bands between 600 nm and 700 nm and the term green emitting material refers to a material which, upon suitable excitation, has one or more emission bands between 510 and 560 nm. Providing a red or green emitting material can be desirable for color rendering purposes. According to alternative aspects of the invention, the first luminescent material is a material having, upon suitable excitation, one or more emission bands between 700 and 1400 nm (IR-A), between 580 and 600 nm (amber and/or orange), between 560 and 580 nm (yellow), between 480 and 510 nm (cyan), between 440 and 480 nm (blue), between 400-440 nm (violet), between 315-400 nm (UV-A), and/or between 280-315 nm (UV-B).

In a preferred embodiment, the first luminescent material comprises a rare-earth doped phosphor material. The phosphor materials may be divalent or trivalent rare-earth doped phosphors. Examples of suitable rare-earth doped phosphor materials include, but are not limited to: LaPO₄:Eu³⁺ (and/or Tb³⁺), CaAlSiN₃:Eu²⁺, Y₂O₃:Eu³⁺ (and/or Tb³⁺), Y(V,P)O₄:Eu³⁺ (and/or Tb³⁺), Lu₃Al₅O₁₂:Ce³⁺ (or Eu³⁺ and/or Tb³⁺), Y₃Al₅O₁₂:Ce³⁺ (or Eu³⁺ and/or Tb³⁺), BaMgAl₁₄O₂₃:Mn²⁺, Mg(Al,Ga)₂O₄:Mn²⁺, Zn₂SiO₄:Mn²⁺, K₂SiF₆:Mn⁴⁺, MgF₂.GeO₂:Mn⁴⁺, and combinations thereof.

As discussed, the first luminescent material may comprise the luminescent nanoparticles according to the invention.

Phosphor materials may be procured today on the open market, or may be synthesized, for example as described in [Riwotzki, K.; Meyssamy, H.; Kornowski, A.; Haase, M. J. Phys. Chem. B. 2000, 104, 2824-2828].

As is known to the skilled person, rare-earth doped phosphor materials comprise a host lattice doped with optically active ions.

The first luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active ions can be incorporated.

Preferably, the host lattice of the first luminescent material is an oxide, phosphate, vanadate or a combination thereof, more preferably selected from the group consisting of Y₃Al₅O₁₂ ("YAG"), Lu₃Al₅O₁₂ ("LuAG"), Y₂O₃, YVPO₄, YVO₄ or LaPO₄ or a combination thereof. Preferably, said preferred host lattice of the first luminescent material is doped with one or more ions selected from the group consisting of Eu³⁺, Tb³⁺, Mn²⁺ and Mn⁴⁺. These ions provide good emission characteristics, such as emission bands that are strong and/or in the red or green part of the visible spectrum.

In case of Eu³⁺ doping, the first luminescent material may for example have a host lattice doped having a doping ratio of at least about 10%, more preferably having a doping ratio of between about 15% and about 80%. In case Tb³⁺ doping, the first luminescent material may for example have a host lattice doped having a doping ratio of at least about 15%, more preferably between about 30% and about 80% Tb³⁺. In case of Mn⁴⁺ doping, the first luminescent material may for example have a host lattice doped having a doping ratio of about 0.1-30%, most preferably between about 1-10%. In case of Mn²⁺ doping, the first luminescent material may for example have a host lattice doped having a doping ratio of about 0.1-30%, most preferably between about 1-10%.

In an exemplary embodiment, the first luminescent material is selected from the group consisting of (Ca,Sr)Ga₂O₆:Eu³⁺ (or Tb³⁺), (Ca,Sr,Ba)La₂Bi₂(SiO₄)₃O:Eu³⁺ (or Tb³⁺), (Ca,Sr,Ba)SnO₃:Eu³⁺ (and/or Tb³⁺), (Ca,Y,Gd)MoO₄:Eu³⁺ (or Tb³⁺), (Y,Gd)BO₃ (pseudo-vaterite) :Eu³⁺ (or Tb³⁺), (Y,Tb)SiO₅:Eu³⁺ (or Tb³⁺), A-La₂O₃:Eu³⁺ (or Tb³⁺), Ba₂(SiO₄):O²⁻:Eu³⁺ (or Tb³⁺), Ba₂MgSi₂O₇:Eu³⁺ (or Tb³⁺), Ba₂Y(BO₃)₂Cl:Eu³⁺ (or Tb³⁺), Ba₃(PO₄)₂:Eu³⁺ (or Tb³⁺), Ba₃Ca₃(PO₄)₄:Eu³⁺ (or Tb³⁺), Ba₃Gd(BO₃)₃:Eu³⁺ (or Tb³⁺), Ba₃Gd₂(BO₃)₄:Eu³⁺ (or Tb³⁺), Ba₃La₂(BO₃)₄:Eu³⁺ (or Tb³⁺), Ba₃V₂O₈:Eu³⁺ (or Tb³⁺), Ba₃Y₂(BO₃)₄:Eu³⁺ (or Tb³⁺), BaB₈O₁₃:Eu³⁺ (or Tb³⁺), BaBPO₅:Eu³⁺ (or Tb³⁺), BaFCl:Eu³⁺ (or Tb³⁺), BaGd₂O₄:Eu³⁺ (or Tb³⁺), BaGd₄Si₅O₁₇:Sm:Eu³⁺ (or Tb³⁺), BaGdB₉O₁₆:Eu³⁺ (or Tb³⁺), BaLaB₉O₁₆:Eu³⁺ (or Tb³⁺), BaSO₄:Eu³⁺ (or Tb³⁺), BaY₂F₈:Yb:Eu³⁺ (or Tb³⁺), BaY₂Si₃O₁₀:Eu³⁺ (or Tb³⁺), BaYB₉O₁₆:Eu³⁺ (or Tb³⁺), BaZr(BO₃)₂:Eu³⁺ (or Tb³⁺), BaZrO₃:Eu³⁺ (or Tb³⁺), BaZrO₃:Eu³⁺ (or Tb³⁺), b-BaB₂O₄:Eu³⁺ (or Tb³⁺), B-Gd₂O₃:Eu³⁺ (or Tb³⁺), Ca₂Al(AlSiO₇) :Eu³⁺ (or Tb³⁺), Ca₂Gd₂(GeO₄)₂O:Eu³⁺ (or Tb³⁺), Ca₂Gd₈(SiO₄)₆O₂:Eu³⁺ (or Tb³⁺), Ca₂Gd₈Si₆O₂₆:Eu³⁺ (or Tb³⁺), Ca₂La₈(SiO₄)₆O₂:Eu³⁺ (or Tb³⁺), Ca₃(BO₃)₂:Eu³⁺ (or Tb³⁺), Ca₃Al₂O₆:Eu³⁺ (or Tb³⁺), Ca₃Gd₂(BO₃)₄:Eu³⁺ (or Tb³⁺), Ca₃La₂(BO₃)₄:Eu³⁺ (or Tb³⁺), Ca₃Y₂(BO₃)₄:Eu³⁺ (or Tb³⁺), Ca₄GdO(BO₃)₃:Eu³⁺ (or Tb³⁺), Ca₅(PO₁₁)₃F:Eu³⁺ (or Tb³⁺), Ca₅(PO₄)₃Br:Eu³⁺ (or Tb³⁺), Ca₅(PO₄)₃F:(4f-site) :Eu³⁺ (or Tb³⁺), Ca₅(PO₄)₃F:(6h-site) :Eu³⁺ (or Tb³⁺), Ca₅(PO₄)₃OH:Eu³⁺ (or Tb³⁺), CaBPO₅:Eu³⁺ (or Tb³⁺), CaF₂:Eu³⁺ (or Tb³⁺), CaLaB₇O₁₃:Eu³⁺ (or Tb³⁺), calcite-CaCO₃:Eu³⁺ (or Tb³⁺), CaO:Eu³⁺ (or Tb³⁺), CaSO₄:Eu³⁺ (or Tb³⁺), CaYO(BO₃):Eu³⁺ (or Tb³⁺), C-Gd₂O₃:Eu³⁺ (or Tb³⁺), C-Lu₂O₃:(C2) :Eu³⁺ (or Tb³⁺), C-Lu₂O₃:(C3i):Eu³⁺ (or Tb³⁺), Cs₂NaYF₆:Tm:Eu³⁺ (or Tb³⁺), C-Sc₂O₃:Yb:Eu³⁺ (or Tb³⁺), C-Y₂O₃:Eu³⁺ (or Tb³⁺), Eu³⁺ (or Tb³⁺)[(ttfa)3(phen)]0:Eu³⁺ (or Tb³⁺), Gd_{17.33}(BO₃)₄(B₂O₅)₂O₁₆:Eu³⁺ (or Tb³⁺), Gd₂BaZnO₅:Eu³⁺ (or Tb³⁺), Gd₂O₂(SO₄) :Eu³⁺ (or Tb³⁺), Gd₂P₄O₁₃:Eu³⁺ (or Tb³⁺), Gd₃O₄Br:Eu³⁺ (or Tb³⁺), Gd₃PO₇:Eu³⁺ (or Tb³⁺), Gd₃Te₂Li₃O₁₂:Eu³⁺ (or Tb³⁺), Gd₈P₂O₁₇:Eu³⁺ (or Tb³⁺), GdAₗ₃ (BO₃)₄:Eu³⁺ (or Tb³⁺), GdAlO₃:Eu³⁺ (or Tb³⁺), GdAlO₃:Eu³⁺ (or Tb³⁺), GdB₃O₆:Eu³⁺ (or Tb³⁺), GdBO₃:Eu³⁺ (or Tb³⁺), GdGaO₃:Eu³⁺ (or Tb³⁺), GdOBr:Eu³⁺ (or Tb³⁺), GdOCl:Eu³⁺ (or Tb³⁺), GdP₃O₉:Eu³⁺ (or Tb³⁺), GdPO₄:Eu³⁺ (or Tb³⁺), I-CaB₂O₄:Eu³⁺ (or Tb³⁺), InBO₃:Eu³⁺ (or Tb³⁺), I-SrB₂O₄:Eu³⁺ (or Tb³⁺), KCaGd(PO₄)₂:Eu³⁺ (or Tb³⁺), La₂₆O₂₇(BO₃)₈:Eu³⁺ (or Tb³⁺), La₂BaZnO₅:Eu³⁺ (or Tb³⁺), La₂Hf₂O₇:Eu³⁺ (or Tb³⁺), La₂O₂(SO₄):Eu³⁺ (or Tb³⁺), La₂O₂S:Eu³⁺ (or Tb³⁺), La₂W₃O₁₂:Eu³⁺ (or Tb³⁺), La₂Zr₃(MoO₄)₉:Eu³⁺ (or Tb³⁺), La₃TaO₄Cl₆:Eu³⁺ (or Tb³⁺), La₃WO₆Cl₃:Eu³⁺ (or Tb³⁺), LaAlO₃:Eu³⁺ (or Tb³⁺), LaB₃O₆:Eu³⁺ (or Tb³⁺), LaBO₃:Eu³⁺ (or Tb³⁺), LaF₃:Eu³⁺ (or Tb³⁺), LaGaO₃:Eu³⁺ (or Tb³⁺), LaMgB₅O₁₀:Eu³⁺ (or Tb³⁺), LaOBr:Eu³⁺ (or Tb³⁺), LaOCl:Eu³⁺ (or Tb³⁺), LaOF:Eu³⁺ (or Tb³⁺), LaOI:Eu³⁺ (or Tb³⁺), LaP₃O₉:Eu³⁺ (or Tb³⁺), LaPO₄:Eu³⁺ (or Tb³⁺), LaYO₃:Eu³⁺ (or Tb³⁺), Li₂Lu₅O₄(BO₃)₃:Eu³⁺ (or Tb³⁺), Li₃Ba₂La₃(MoO₄)₈:Eu³⁺ (or Tb³⁺), Li₃La₂(BO₃)₃:Eu³⁺ (or Tb³⁺), Li₆Gd(BO₃)₃:Eu³⁺ (or Tb³⁺), Li₆Y(BO₃)₃:Eu³⁺ (or Tb³⁺), LiCaAlF₆:Eu³⁺ (or Tb³⁺), LiEu³⁺ (or Tb³⁺), Mo₂O₈:Eu³⁺ (or Tb³⁺), LiGd₆O₅(BO₃)₃:Eu³⁺ (or Tb³⁺), LiGdF₄:Eu³⁺ (or Tb³⁺), LiGdGeO₄:Eu³⁺ (or Tb³⁺), LiGdO₂:Eu³⁺ (or Tb³⁺), LiGdSiO₄:Eu³⁺ (or Tb³⁺), LiLa₂O₂BO₃:Eu³⁺ (or Tb³⁺), LiLaGeO₄:Eu³⁺ (or Tb³⁺), LiLaO₂:Eu³⁺ (or Tb³⁺), LiLaP₄O₁₂:Eu³⁺ (or Tb³⁺), LiLaSiO₄:Eu³⁺ (or Tb³⁺), LiLuGeO₄:Eu³⁺ (or Tb³⁺), LiLuO₂:Eu³⁺ (or Tb³⁺), LiLuSiO₄:Eu³⁺ (or Tb³⁺), LiScO₂:Eu³⁺ (or Tb³⁺), LiSr₂YO₄:Eu³⁺ (or Tb³⁺), LiSrAlF₆:Eu³⁺ (or Tb³⁺), LiY₆O₅(BO₃)₃:Eu³⁺ (or Tb³⁺), LiYF₄:Eu³⁺ (or Tb³⁺), LiYGeO₄:Eu³⁺ (or Tb³⁺), LiYO₂:Eu³⁺ (or Tb³⁺), LiYSiO₄:Eu³⁺ (or Tb³⁺), Lu₂O₂(SO₄):Eu³⁺ (or Tb³⁺), Lu₂Si₂O₇:Eu³⁺ (or Tb³⁺), Lu₃Al₅O₁₂:Eu³⁺ (or Tb³⁺), Lu₃Al₅O₁₂:Yb:Eu³⁺ (or Tb³⁺), LuBO₃:Eu³⁺ (or Tb³⁺), LuBO₃ (calcite):Eu³⁺ (or Tb³⁺), LuOCl:Eu³⁺ (or Tb³⁺), LuPO₄:Eu³⁺ (or Tb³⁺), Mg₂Gd₈(SiO₄)₆O₂:Eu³⁺ (or Tb³⁺), Mg₂La₈(SiO₄)₆O₂:Eu³⁺ (or Tb³⁺), MgO:Eu³⁺ (or Tb³⁺), MgSiO₃:Eu³⁺ (or Tb³⁺), Na₃YSi₃O₉:Eu³⁺ (or Tb³⁺), Na₆Gd(BO₃)₃:Eu³⁺ (or Tb³⁺), NaGdGeO₄:Eu³⁺ (or Tb³⁺), NaGdO₂:Eu³⁺ (or Tb³⁺), NaGdSiO₄:Eu³⁺ (or Tb³⁺), NaLaGeO₄:Eu³⁺ (or Tb³⁺), NaLaO₂:Eu³⁺ (or Tb³⁺), NaLaSiO₄:Eu³⁺ (or Tb³⁺), NaLuGeO₄:Eu³⁺ (or Tb³⁺), NaLuSiO₄:Eu³⁺ (or Tb³⁺), NaScO₂:Eu³⁺ (or Tb³⁺), NaSrLa(VO₄)₂:Eu³⁺ (or Tb³⁺), NaYGeO₄:Eu³⁺ (or Tb³⁺), NaYSiO₄:Eu³⁺ (or Tb³⁺), ScBO₃:Eu³⁺ (or Tb³⁺), ScOCl:Eu³⁺ (or Tb³⁺), ScPO₄:Eu³⁺ (or Tb³⁺), Sr₂B₂O₅:Eu³⁺ (or Tb³⁺), Sr₂Gd₈(SiO₄)₆O₂:Eu³⁺ (or Tb³⁺), Sr₂La₂Zn₂O₇:Eu³⁺ (or Tb³⁺), Sr₂La₂Zn₂O₇:Eu³⁺ (or Tb³⁺), Sr₂LaAlO₅:Eu³⁺ (or Tb³⁺), Sr₃(BO₃)₂:Eu³⁺ (or Tb³⁺), Sr₃(PO₄)₂:Eu³⁺ (or Tb³⁺), Sr₃(PO₄)₂:Sm:Eu³⁺ (or Tb³⁺), Sr₃Gd₂(BO₃)₄:Eu³⁺ (or Tb³⁺), Sr₃La₂(BO₃)₄:Eu³⁺ (or Tb³⁺), Sr₃La₆(SiO₄)₆:Eu³⁺ (or Tb³⁺), Sr₃Y₂(BO₃)₄:Eu³⁺ (or Tb³⁺), Sr₅(PO₄)₃F:Eu³⁺ (or Tb³⁺), Sr₉Ln(VO₄)₇:Eu³⁺ (or Tb³⁺), SrAl₂B₂O₇:Eu³⁺ (or Tb³⁺), SrB₄O₇:Eu³⁺ (or Tb³⁺), SrB₆O₁₀:Eu³⁺ (or Tb³⁺), SrCO₃:Eu³⁺ (or Tb³⁺), SrGdAlO₄:Eu³⁺ (or Tb³⁺), SrHfO₃:Tm:Eu³⁺ (or Tb³⁺), SrLa₂BeO₅:(4c):Eu³⁺ (or Tb³⁺), SrLa₂BeO₅:(8d):Eu³⁺ (or Tb³⁺), SrLaAlO₄:Eu³⁺ (or Tb³⁺), SrLaGa₃O₇:Eu³⁺ (or Tb³⁺), SrLaO(BO₃):Eu³⁺ (or Tb³⁺), SrO:Eu³⁺ (or Tb³⁺), SrY₂O₄:(Sr-site):Eu³⁺ (or Tb³⁺), SrY₂O₄:(Y-site1):Eu³⁺ (or Tb³⁺), SrY₂O₄:(Y-site2):Eu³⁺ (or Tb³⁺), Tb₂Mo₃O₁₂:Eu³⁺ (or Tb³⁺), Tb₂W₃O₁₂:Eu³⁺ (or Tb³⁺), TbBO₃:Eu³⁺ (or Tb³⁺), ThO₂:Eu³⁺ (or Tb³⁺), X1-Gd₂SiO₅:Eu³⁺ (or Tb³⁺), X1-Y₂SiO₅:Eu³⁺ (or Tb³⁺), X2-Y₂SiO₅:Eu³⁺ (or Tb³⁺), Y_{17.33}(BO₃)₄(B₂O₅)₂O₁₆:Eu³⁺ (or Tb³⁺), Y₂Ge₂O₇:Eu³⁺ (or Tb³⁺), Y₂GeO₅:Eu³⁺ (or Tb³⁺), Y₂O₂(SO₄):Eu³⁺ (or Tb³⁺), Y₂O₂S:Eu³⁺ (or Tb³⁺), Y₂O₂S:Eu³⁺ (or Tb³⁺), Y₂O₃:Eu³⁺ (or Tb³⁺), Y₂P₄O₁₃:Eu³⁺ (or Tb³⁺), Y₂Si₂O₇:Eu³⁺ (or Tb³⁺), Y₂SiO₅:Eu³⁺ (or Tb³⁺), Y₃Al₅O₁₂:Eu³⁺ (or Tb³⁺), Y₃O₄Br:Eu³⁺ (or Tb³⁺), Y₃O₄Cl:Eu³⁺ (or Tb³⁺), Y₃PO₇:Eu³⁺ (or Tb³⁺), Y₄GeO₈:Eu³⁺ (or Tb³⁺), Y₈P₂O₁₇:Eu³⁺ (or Tb³⁺), YAl₃(BO₃)₄:Eu³⁺ (or Tb³⁺), YAlO₃:Eu³⁺ (or Tb³⁺), YBO₃:Eu³⁺ (or Tb³⁺), YbOBr:Yb:Eu³⁺ (or Tb³⁺), YF₃:Eu³⁺ (or Tb³⁺), YOBr:Eu³⁺ (or Tb³⁺), YOCl:Eu³⁺ (or Tb³⁺), YOCl:Eu³⁺ (or Tb³⁺), YOF:Eu³⁺ (or Tb³⁺), YOF:Eu³⁺ (or Tb³⁺), YP₃O₉:Eu³⁺ (or Tb³⁺), YPO₄:Eu³⁺ (or Tb³⁺), YTaO₄:Eu³⁺ (or Tb³⁺), YVO₄:Eu³⁺ (or Tb³⁺), ZrP₂O₇:Eu³⁺ (or Tb³⁺), Y₃Al₅O₁₂:Ce³⁺, Lu₃Al₅O₁₂:Ce³⁺ or mixtures thereof.

The skilled person will understand that the notation :Eu³⁺ (or :Tb³⁺ or :Ce³⁺ or :Mn²⁺ or :Mn⁴⁺) indicates that the host lattice is doped with Eu³⁺ (or with Tb³⁺, or with Ce³⁺ or with Mn²⁺ or with Mn⁴⁺).

### Second luminescent material

The second luminescent material preferably comprises the (A₁₋ₓBₓ)₃(C_{1-y}D_{y})₅O₁₂ garnet nanoparticles according to the invention. In such compositions, B is preferably cerium and/or terbium.

As discussed, the first luminescent material may comprise the luminescent nanoparticles according to the invention. In compositions wherein the first luminescent material comprises the nanoparticles according to the invention, the second luminescent material is preferably as described below.

Any suitable inorganic luminescent material may be used as second luminescent material. The second material is capable of absorbing light in a second wavelength range. The second wavelength may be any wavelength range of interest.

Preferably, the second luminescent material has one or more excitation bands in the wavelength range between 380 to 580 nm, preferably wherein said second luminescent material has one or more excitation bands in the UV-A (315 to 400 nm), violet (400 to 440 nm), blue (440 to 480 nm) or green (510 to 560 nm) wavelength range, most preferably in the blue (440 to 480 nm) wavelength range. LEDs based on (Al,In,Ga)N provide efficient "pump" light generation in the violet to blue wavelength range (about 400 nm to about 480 nm). Examples of blue-excitable materials are CaAlSiN₃:Eu²⁺, Y₃Al₅O₁₂:Ce³⁺, CsPbBr₃, CdSe, InP.

In other aspects of the invention, the second luminescent material is a material having one or more excitation bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

In another preferred embodiment, the host lattice of the second luminescent material is a garnet, fluoride, silicate, phosphate or nitride, more preferably selected from the group consisting of Y₃Al₅O₁₂ ("YAG"), Lu₃Al₅O₁₂ ("LuAG"), MgF₂, CaF₂, Sr₂SiO₄, Ba₂SiO₄, Ca₂MgSi₂O₇, LiSrPO₄, CaAlSiN₃ or a combination thereof. Preferably, said preferred host lattice of the second luminescent material is doped with one or more ions selected from of the group consisting of Eu²⁺, Pb²⁺, Bi³⁺ and Ce³⁺, more preferably Eu²⁺ or Ce³⁺ in combination with Tb³⁺, most preferably Ce³⁺ in combination with Tb³⁺.

Preferably, the host lattice of the second luminescent material or precursor thereof is a garnet, such as Y₃Al₅O₁₂ ("YAG") or Lu₃Al₅O₁₂ ("LuAG") or a combination thereof. Most preferably, the host lattice is selected from the group consisting of Y₃Al₅O₁₂ ("YAG") or Lu₃Al₅O₁₂ ("LuAG") or a combination thereof and the dopant includes Ce³⁺, optionally in combination with Tb³⁺.

Preferably, in the case of Ce³⁺ doping, the second luminescent material has a host lattice doped at a level of about 0.05-5%, more preferably about 0.1-4%.

Preferably, the first luminescent material comprises Y₂O₃:RE, wherein RE is europium(III), and the second luminescent material comprises the rare-earth metal doped garnet nanoparticles according to the invention, wherein the rare earth metal is cerium and/or terbium. More preferably, the Y₂O₃:RE material is provided as nanoparticles.

In a preferred embodiment, the first luminescent material comprises rare-earth metal doped nanoparticles, wherein the rare earth metal is europium(III), and the second luminescent material comprises the (A₁₋ₓBₓ)₃(C_{1-y}D_{y})₅O₁₂ garnet nanoparticles of the invention, wherein B is cerium(III) and/or terbium(III).

The invention further relates to a light-emitting device comprising the luminescent nanoparticles obtainable by the method according to the invention. Preferably the light-emitting device further comprises an excitation source for the luminescent material, such as for the second luminescent material. Preferably the excitation sources is a UV-A, violet, or blue light emitting material which emits light towards the luminescent material with a wavelength of 315-400 nm (UV-A), 400-440 nm (violet), or 440-480 nm (blue), more preferably between 430-465 nm.

The light emitting device may be constructed from a blue emitting LED with the (A₁₋ₓBₓ)₃(C_{1-y}D_{y})₅O₁₂ garnet nanoparticles or luminescent composition according to the inventions deposited on top of the LED chip. The nanoparticles according to the invention may be bound in a polymer or silicone slurry that is deposited on the blue LED chip and subsequently cured.

The invention further relates to a lighting system comprising a light emitting device according to the invention. Preferably, the lighting system is selected from the group consisting of a lamp or luminaire, office lighting systems, household application systems, shop lighting systems, home lighting systems, accent lighting systems, spot lighting systems, theatre lighting systems, fibre-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention further relates to the use of luminescent compositions according to the invention or luminescent materials comprising the (A₁₋ₓBₓ)₃(C_{1-y}D_{y})₅O₁₂ garnet nanoparticles of the invention as a taggant. A taggant is a marker added to materials to allow various forms of testing. The overall excitation/emission spectra of the luminescent materials and/or luminescent compositions according to the invention may have unique signatures, compared to conventional approaches, such that they may be useful as taggants in anti-counterfeiting applications. For instance, US7667828B discloses a tagging system containing multiple types of taggants that differ from each other.

### Examples

### Comparative example 1:

YAG: 1.5% Ce precursors were synthesized via a precipitation method according to (Journal of Materials Research, 2018, 53-15196 - 15203). A 0.5M K₂SO₄ solution in water was prepared. YAG:Ce precursor was mixed with K₂SO₄ solution to obtain a 1:15 YAG: K₂SO₄ wt ratio dispersion. The mixing was enhanced by sonification in an ultrasonic bath for 30 minutes. Igepal CO-520 was added in a 1:4 Igepal: K₂SO₄ solution volume ratio. Cyclohexane was added in a 2.5:1 cyclohexane: K₂SO₄ solution volume ratio. The mixture was mixed by putting it in an ultrasonic bath for 30 minutes. Acetone was added in a 1:8 acetone:reaction mixture volume ratio. The mixture was centrifuged, washed with acetone, and the sediment is dried.

The obtained dried powder was heated in an oven to 1020 °C for 2 hours in air. The annealed sample was washed with water several times to remove the K₂SO₄.

The luminescence was measured of the YAG:Ce and shown in Fig. 1. EP3789468A1 discloses the PL spectra of YAG:Ce after protected salt annealing in air compared to PL of sample before annealing. The prebaked precursor sample is amorphous in nature so the emission is absent. The annealed sample shows broad yellow emission. Analysis with TEM showed that sintering was minimized after protected salt-annealing. The presence of the salt during annealing enables increasing the emission without resulting in sintering of the particles.

### Comparative example 2:

YAG:1°/Ce nanoparticles were prepared by glycothermal method following the process disclosed in (J. Mater. Chem. C, 2017,5,12561). A 85:15 volume ratio of 1,4-butane-diol and diethylene glycol was used as solvent. The precursor metal organic salts were pre-dried using the P₂O₅ scavenger method discussed in (J. Mater. Chem. C, 2017,5,12561). The reaction mixture was then mixed and inserted in an autoclave and treated at 300 °C temperature for at least 10 minutes. This process yields individual nanoparticles of size < 10 nm. 300 mg of YAG:Ce nanoparticles were dispersed in 5 ml solution of 0.5M K₂SO₄ in H₂O. The solution then ultrasonicated for 30 minutes. To a separate beaker, 25 ml Igepal CO-520 was added (i.e. a 5:1 Igepal: K₂SO₄ solution volume ratio). 250 ml cyclohexane was added to the Igepal CO-520 beaker (a 50:1 cyclohexane: K₂SO₄ solution volume ratio). The mixture of Igepal CO-520 and cyclohexane was stirred for 10 minutes. The YAG: K₂SO₄ solution was then added to the Igepal CO-520-cyclohexane mixture in a dropwise manner under constant stirring. The mixture was mixed by putting it in an ultrasonic bath for 30 minutes. Acetone was added in a 1:15 acetone:mixture volume ratio. The mixture was centrifuged and the sediment was dried.

The obtained dried powder was heated in an oven to 1000 °C for 2 hours in air. The powder was washed with water to remove the K₂SO₄.

The emission intensity of annealed sample is shown in Figure 2.

### Comparative example 3:

YAG:1°/Ce nanoparticles were prepared by glycothermal method following the process disclosed in (J. Mater. Chem. C, 2017,5,12561). A 85:15 volume ratio of 1,4-butane-diol and diethylene glycol was used as solvent. The precursor metal organic salts were pre-dried using the P₂O₅ scavenger method discussed in (J. Mater. Chem. C, 2017,5,12561). The reaction mixture was then mixed and inserted in an autoclave and treated at 300 °C temperature for at least 10 minutes. This process yields individual nanoparticles of size < 10 nm. 300 mg of YAG:Ce nanoparticles were dispersed in 5 ml solution of 0.5M K₂SO₄ in H₂O. The solution was then ultrasonicated for 30 minutes. To a separate beaker, 25 ml Igepal CO-520 was added (i.e., a 5:1 Igepal: K₂SO₄ solution volume ratio). 250 ml cyclohexane was added to the Igepal CO-520 beaker (i.e., a 50:1 cyclohexane: K₂SO₄ solution volume ratio). The solution of Igepal CO-520 and cyclohexane was stirred for 10 minutes. The YAG: K₂SO₄ mixture was then added to the Igepal CO-520-cyclohexane solution in a dropwise manner under constant stirring. The mixture was mixed by putting it in an ultrasonic bath for 30 minutes. Acetone was added in a 1:15 acetone:mixture volume ratio. The mixture was centrifuged and the sediment was dried.

The obtained dried powder was heated in an oven to 900 °C for 2 hours in air. The powder was washed with water to remove the K₂SO₄.

The emission intensity of annealed sample is shown in Figure 3.

### Comparative Example 4:

YAG:1% Ce nanoparticles were prepared by glycothermal method following the process disclosed in (J. Mater. Chem. C, 2017,5,12561). A 85:15 volume ratio of 1,4-butane-diol and diethylene glycol was used as solvent. The precursor metal organic salts were pre-dried using the P₂O₅ scavenger method discussed in (J. Mater. Chem. C, 2017,5,12561). The reaction mixture was then mixed and inserted in an autoclave and treated at 300 °C temperature for at least 10 minutes. This process yields individual nanoparticles of size < 10 nm. 300 mg of YAG:Ce nanoparticles were dispersed in 5 ml solution of 0.5M K₂SO₄ in H₂O. The solution was then ultrasonicated for 30 minutes. Acetone was added in a 5:1 acetone:mixture volume ratio. The mixture was centrifuged and the sediment was dried.

The obtained dried powder was heated in an oven to 800 °C for 8 hours in reducing atmosphere using a carbon double crucible setup. Here, the YAG:Ce - K₂SO₄ salt mixture was taken in a crucible. This crucible was inserted in a bigger crucible partially filled with carbon powder. The bigger crucible was then covered with a lid. The double crucible was heated in a heating oven at 800 °C for 8 hours. The powder was washed with water to remove the K₂SO₄.

In this comparative example, the first annealing step was skipped. The lower annealing temperature resulted in a smaller particle size, but the PL intensity was also less than for the twice annealed examples.

### Example 1:

YAG:1.5%Ce precursors were synthesized via a precipitation method (Journal of Materials Research, 2018, 53-15196 -15203). A 0.5M K₂SO₄ solution in water was prepared. YAG:1.5%Ce precursor was mixed with K₂SO₄ solution to obtain a 1:15 YAG: K₂SO₄ wt ratio dispersion. The mixing was enhanced by sonification in an ultrasonic bath for 30 minutes. Igepal CO-520 was added in a 1:4 Igepal: K₂SO₄ solution volume ratio. Cyclohexane was added in a 2.5:1 cyclohexane: K₂SO₄ solution volume ratio. The mixture was mixed by putting it in an ultrasonic bath for 30 minutes. Acetone was added in a 1:8 acetone:reaction mixture volume ratio. The mixture was centrifuged, washed with acetone, and the sediment is dried. The obtained dried powder was heated in an oven to 1020 °C for 2 hours in air.

Following the first annealing, a second annealing was carried out in reducing atmosphere using a carbon double crucible setup. Here, the first annealed YAG:1.5%Ce - K₂SO₄ salt mixture was taken in a crucible. This crucible was inserted in a bigger crucible partially filled with carbon powder. The bigger crucible was then covered with a lid. The double crucible was heated in a heating oven at 800 °C for 4 hours. The annealed sample was washed with water several times to remove the K₂SO₄.

The emission intensity of the sample annealed in air and in reducing atmosphere is improved over the sample that was annealed only in air (Figure 1). The TEM image in Figure 4 shows that the sintering was minimal after two-step protected salt annealing. As the second annealing step is at a lower temperature, the effect of the second step on particle morphology is negligible.

Contrary to (Journal of Materials Research, 2018, 53-15196 - 15203), the results using precipitation method of YAG synthesis (comparative example 1, example 1, etc.) have always yielded networked nanoparticles as shown in a representative example of Figure 4. The (Journal of Materials Research, 2018, 53-15196 - 15203) suggests very small individual, spherical nanoparticles of sizes < 10 nm, which were observed to be not reproducible.

### Example 2:

YAG:1°/Ce nanoparticles were prepared by glycothermal method following the process disclosed in (J. Mater. Chem. C, 2017,5,12561). A 85:15 volume ratio of 1,4-butane-diol and diethylene glycol was used as solvent. The precursor metal organic salts were pre-dried using the P₂O₅ scavenger method discussed in (J. Mater. Chem. C, 2017,5,12561). The reaction mixture was then mixed and inserted in an autoclave and treated at 300 °C temperature for at least 10 minutes. This process yields individual nanoparticles of size < 10 nm. 300 mg of YAG:Ce nanoparticles was dispersed in 5 ml solution of 0.5M K₂SO₄ in H₂O. The solution then ultrasonicated for 30 minutes. To a separate beaker, 25 ml of Igepal CO-520 was added, i.e. a 5:1 Igepal: K₂SO₄ solution volume ratio. Cyclohexane was added to the Igepal CO-520 beaker in a 50:1 cyclohexane: K₂SO₄ solution volume ratio. The mixture of Igepal CO-520 and cyclohexane was stirred for 10 minutes. The YAG: K₂SO₄ solution was then added to Igepal CO-520-cyclohexane mixture in a dropwise manner under constant stirring. The mixture was mixed by putting it in an ultrasonic bath for 30 minutes. Acetone was added in a 1:15 acetone:mixture volume ratio. The mixture was centrifuged and the sediment was dried.

The obtained dried powder was heated in an oven to 1000 °C for 2 hours in air. Following the first annealing, a second annealing was carried out in reducing atmosphere using a carbon double crucible setup. Here, the first annealed YAG:Ce - K₂SO₄ salt mixture was taken in a crucible. This crucible was inserted in a bigger crucible partially filled with carbon powder. The bigger crucible was then covered with a lid. The double crucible was heated in a heating oven at 800 °C for 8 hours. The powder was washed with water to remove the K₂SO₄.

The emission intensity of annealed sample is shown in Figure 2. Electron microscopy analysis of the final annealed sample shows spherical, individual nanoparticles with average particle size around 20 nm (Figure 5).

### Example 3:

YAG:1°/Ce nanoparticles were prepared by glycothermal method following the process disclosed in (J. Mater. Chem. C, 2017,5,12561). A 85:15 volume ratio of 1,4-butane-diol and diethylene glycol was used as solvent. The precursor metal organic salts were pre-dried using the P₂O₅ scavenger method discussed in (J. Mater. Chem. C, 2017,5,12561). The reaction mixture was then mixed and inserted in an autoclave and treated at 300 °C temperature for at least 10 minutes. This process yields individual nanoparticles of size < 10 nm. 300 mg of YAG:Ce nanoparticles was dispersed in 5 ml solution of 0.5M K₂SO₄ in H₂O. The solution then ultrasonicated for 30 minutes. To a separate beaker, 25 ml of Igepal CO-520 was added, i.e. a 5:1 Igepal: K₂SO₄ solution volume ratio. Cyclohexane was added to the Igepal CO-520 beaker in a 50:1 cyclohexane: K₂SO₄ solution volume ratio. The mixture of Igepal CO-520 and cyclohexane was stirred for 10 minutes. The YAG: K₂SO₄ solution was then added to Igepal CO-520-cyclohexane mixture in a dropwise manner under constant stirring. The mixture was mixed by putting it in an ultrasonic bath for 30 minutes. Acetone was added in a 1:15 acetone:mixture volume ratio. The mixture was centrifuged and the sediment was dried.

The obtained dried powder was heated in an oven to 900 °C for 2 hours in air. Following the first annealing, a second annealing step was carried out in reducing atmosphere using a carbon double crucible setup. Here, the first annealed YAG:Ce - K₂SO₄ salt mixture was taken in a crucible. This crucible was inserted in a bigger crucible partially filled with carbon powder. The bigger crucible was then covered with a lid. The double crucible was heated in a heating oven at 800 °C for 8 hours. The powder was washed with water to remove the K₂SO₄.

The emission intensity of annealed sample is shown in Figure 3.

### Example 4:

YAG:3% Ce nanoparticles were prepared by glycothermal method following the process disclosed in (J. Mater. Chem. C, 2017,5,12561). A 85:15 volume ratio of 1,4-butane-diol and diethylene glycol was used as solvent. The precursor metal organic salts were pre-dried using the P₂O₅ scavenger method discussed in (J. Mater. Chem. C, 2017,5,12561). The reaction mixture was then mixed and inserted in an autoclave and treated at 300 °C temperature for at least 10 minutes. This process yields individual nanoparticles of size < 10 nm. 300 mg of YAG:Ce nanoparticles were dispersed in 5 ml solution of 0.5M K₂SO₄ in H₂O. The solution was then ultrasonicated for 30 minutes. Acetone was added in a 5:1 acetone:mixture volume ratio. The mixture was centrifuged and the sediment was dried.

The obtained dried powder was heated in an oven to 1000 °C for 2 hours in air. Following the first annealing step, a second annealing step was carried out in reducing atmosphere using a carbon double crucible setup. Here, the first annealed YAG:Ce - K₂SO₄ salt mixture was taken in a crucible. This crucible was inserted in a bigger crucible partially filled with carbon powder. The bigger crucible was then covered with a lid. The double crucible was heated in a heating oven at 800 °C for 8 hours. The powder was washed with water to remove the K₂SO₄.

The emission and excitation spectra of annealed sample are shown in Figure 6. The average particle size is slightly higher in only salt matrix annealed (example 4) nanoparticles compared to microemulsion based salt matrix annealed (example 2) nanoparticles baked in same conditions. Figure 7 shows the TEM of nanoparticles suggesting slightly bigger particles.

## Claims

1. A method for treating luminescent nanoparticles or precursors thereof, comprising
(i) providing a mixture of (a) a salt and (b) luminescent nanoparticles or precursors thereof, wherein the luminescent nanoparticles are (A₁₋ₓBₓ)₃(C_{1-y}D_{y})₅O₁₂ garnet nanoparticles, wherein A comprises one or more of yttrium, lutetium, gadolinium; B comprises one or more rare earth elements, C comprises one or more of aluminum, gallium, and scandium, D comprises one or more transition metal ions, 0≤x≤1, 0≤y≤1, and x+y>0,
(ii) heating said mixture at a first temperature for a first duration,
wherein said first temperature is 800 °C or higher,
wherein said first duration is 10 minutes or more, and
(iii) heating said mixture under a reducing atmosphere at a second temperature for a second duration,
wherein said second temperature is 500 °C or higher,
wherein said second duration is 1 hour or more.

2. The method according to claim 1, wherein B comprises cerium and C comprises aluminum.

3. The method according to any one of the preceding claims, wherein said luminescent nanoparticles are obtained by a solvothermal method, preferably by a glycothermal method.

4. The method according to any one of the preceding claims, wherein
said first temperature is 900 °C or higher, and preferably 1500 °C or lower, more preferably 1250 °C or lower, and/or
said first duration is 10 minutes or more, preferably 1 hour or more, and preferably 8 hours or less, more preferably 5 hours or less, most preferably 3 hours or less,
and preferably wherein the heating said mixture at a first temperature for a first duration is performed in an atmosphere, wherein the atmosphere is air or an inert gas.

5. The method according to any one of the preceding claims, wherein
said reducing atmosphere comprises carbon monoxide,
said second temperature is 600 °C or higher, preferably 700 °C or higher, and preferably 1050 °C or lower, more preferably 900 °C or lower, and/or,
said second duration is 2 hours or more, preferably 5 hours or more, more preferably 7 hours or more, and preferably 12 hours or less, more preferably 9 hours or less.

6. The method according to claim 5, wherein heating under a reducing atmosphere is performed by having the mixture in a first crucible, said first crucible being contained in a closed second crucible, said second crucible further containing a carbon source.

7. The method according to any one of the preceding claims, wherein said salt has a melting temperature of 800 °C or higher, preferably 1000 °C or higher; and/or
wherein the salt comprises Se²⁻, S²⁻, Cl⁻, F⁻, Br, I⁻, SO₄²⁻, PO₄³⁻, or NO₃⁻, or a combination thereof as anion and H⁺, Li⁺, Na⁺, Al³⁺, Ba²⁺, K⁺, Be²⁺, Ca²⁺, Mg²⁺, or Sr²⁺, or a combination thereof as cation, more preferably wherein the salt is K₂SO₄.

8. The method according to any one of the preceding claims, further comprising step (iv) of removing the salt from said mixture after step (iii), preferably wherein said removing comprises contacting the mixture with a solvent, more preferably wherein the solvent is water.

9. A luminescent nanoparticle obtainable by the method as described in any of the previous claims, which is a (A₁₋ₓBₓ)₃(C_{1-y}D_{y})₅O₁₂ garnet nanoparticle, wherein A comprises one or more of yttrium, lutetium, gadolinium; B comprises one or more rare earth elements, C comprises one or more of aluminum, gallium, and scandium, D comprises one or more transition metal ions, and 0≤x≤1, 0≤y≤1, and x+y>0, said luminescent nanoparticle having:
- a BET surface area of > 10 m²/g, or a D₅₀ of > 0.5 nm and <_ 100 nm, more preferably ≥ 5 nm and ≤ 50 nm, as measured using transmission electron microscopy (TEM)
- a storage photostability such that the photoluminescence intensity after two weeks of storage in a non-inert atmosphere is at least 80% of the initial photoluminescence intensity,
- a photostability such that at least 80% of the initial photoluminescence intensity remains after 10 hours when irradiating at 450 nm with a light intensity of 0.1 W/cm², preferably at least 80% of the initial photoluminescence intensity after 15 hours.

10. The luminescent nanoparticle according to claim 9, wherein B comprises at least Ce, said nanoparticle having:
- a photoluminescence quantum yield of more than 25%, preferably more than 30%,
- peak ratio in the excitation spectra (between 455 nm and 380 nm) of more than 20.

11. The luminescent nanoparticle according to claim 9 or 10, wherein A comprises at least one selected from the group of yttrium, lutetium, and B comprises at least one of cerium, terbium and europium, preferably wherein C is aluminum and B is cerium, europium, terbium or a combination of terbium and europium:
- when B comprises cerium, the molar concentration of cerium on the combined total of A and B is 0.05-5%,
- when B comprises europium, the molar concentration of europium on the combined total of A and B is 0.1-20%, and/or
- when B comprises terbium, the molar concentration of terbium on the combined total of A and B is 20-100%.

12. A luminescent composition comprising the luminescent nanoparticles of any one of claims 9-11, or obtainable by the method according to claims 1-8, said luminescent composition preferably comprising at least 800 ppm of one or more selected from the group of Li, Na, Ba, K, Be, Ca, Mg, or Sr, and at least 800 ppm of one or more selected from the group of Se, S, Cl, F, Br, I, P, or N.

13. The luminescent composition according to claim 12, comprising a first luminescent material and a second luminescent material, wherein at least one of the first luminescent material and the second luminescent material comprises the luminescent nanoparticles of any one of claims 9-11, preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material,
more preferably wherein both the first luminescent material and the second luminescent material comprise luminescent nanoparticles according to any one of claims 9-11.
